# FASCICULE DE BREVET EUROPEEN

(11) **EP 0 785 058 B1**
(45) Date de publication et mention de la délivrance du brevet: **05.06.2002**
(21) Numéro de dépôt: 97104468.0
(22) Date de dépôt: 13.01.1994
(51) Int. Cl.: B29C 45/44, B60J 10/02, B60J 1/02

(54) **Procédé et dispositif pour la fabrication d'un vitrage automobile prééquipé pour le collage dans une baie**
Verfahren und Vorrichtung zur Herstellung einer zur Verklebung in einer Rahmenöffnung vorgefertigten Fahrzeugverglasung
Method and device for the fabrication of a vehicle glazing preassembled in order to be glued in an opening

(30) Priorité: 16.01.1993 DE 4301026; 03.02.1993 DE 4302981; 08.04.1993 DE 4311584
(43) Date de publication de la demande: 23.07.1997
(62) Demande divisionnaire de: 94400086.8
(73) Titulaire: SAINT-GOBAIN GLASS FRANCE, 92400 Courbevoie (FR); SEKURIT SAINT GOBAIN Deutschland GmbH & Co. KG, 52066 Aachen (DE)
(72) Inventeur: Cornils, Gerd, 52399 Merzenich (DE); Fisher, Florian, 52477 Alsdorf (DE); Kötte, Rolf, 52477 Alsdorf-Begau (DE); von Alpen, Ulrich, 52078 Aachen (DE); Bruck, Karl-Heinrich, 38442 Wolsburg (DE); Ohlenforst, Hans, 52064 Aachen (DE)
(74) Mandataire: Le Cam, Stéphane Georges Elie

(56) Documents cités:
- DE-A- 3 518 145
- FR-A- 2 157 189
- GB-A- 2 072 568
- JP-A- 60 099 619
- US-A- 3 194 570
- US-A- 4 155 698
- US-A- 4 235 582

## Description

L'invention concerne un procédé de fabrication d'un vitrage pour le montage par collage sur la tôle d'une baie en particulier d'un vitrage automobile comportant un profilé en forme de cadre à sa périphérie, profilé qui comporte une gorge avec une section en U dirigé vers la tôle de la baie qui est constitué d'un polymère, le profilé comportant de part et d'autre du U deux ailes équipées vers l'intérieur de nervures servant à l'accrochage du cordon de colle placé à l'intérieur dudit U.

Un vitrage du type précédent est connu par le document EP-B-0 258 128. Dans ce document, la liaison entre le vitrage prééquipé et la tôle de la baie de la fenêtre se fait essentiellement grâce à une liaison adhésive entre la colle et le profilé polymérisé en forme de cadre. La structure de la gorge du profilé avec ses nervures longitudinales a pour fonction, dans ce cas, d'améliorer encore la liaison entre la colle de pose et le polymère du profilé. Ce sont les nervures longitudinales qui produisent l'accrochage mécanique supplémentaire entre le profilé polymérisé et la colle. Le profilé polymérisé en forme de cadre est constitué dans le vitrage connu de polyuréthane soit avec un système monocomposant qui durcit à l'humidité, soit avec un système à deux composants qui réagissent immédiatement après leur mélange au moment de l'extrusion sur le vitrage.

Grâce à ce document, il est également connu de diminuer volontairement l'adhésion entre le profil polymérisé et la colle de pose ou même de l'empêcher totalement de telle manière que la liaison ne soit assurée que par l'accrochage mécanique procuré par la forme de la partie commune au profilé et à la colle de montage. On obtient dans ce cas la diminution ou la suppression de la liaison adhésive entre les deux par l'interposition d'un matériau intermédiaire ad hoc.

L'invention se donne pour tâche de fournir une technique de fabrication du vitrage équipé de son profilé polymérisé en forme de cadre, le profilé comportant une gorge avec des nervures longitudinales.

Le document GB-A-2 072 568 décrit un procédé de moulage d'un corps avec une portion creuse sensiblement tubulaire comportant une lèvre annulaire faisant saillie sur la paroi intérieure de la partie creuse. Le moule comprend un noyau qui est dégagé après moulage alors que le corps est encore maintenu par le moule.

Le document JP-A-85/099 619 décrit le moulage d'une pièce en résine composée d'une base plate sur laquelle se dresse une partie creuse avec une saillie interne. Le moule comporte deux demi-moules dont un incorpore un noyau mobile coulissant sous l'effet d'un ressort. L'extraction du noyau hors de la pièce moulée résulte de l'action de goujons sur la base plate de la pièce moulée.

Le document US-A-4 155 698 décrit une technique de moulage d'un bouchon en plastique avec un moule en trois parties, dont un noyau qui coulisse librement dans une partie de moule femelle.

Le document US-A-4 235 582 décrit une technique de moulage d'une pièce profilée en C avec un moule comportant deux demi-moules et un noyau. L'extraction du noyau hors du profilé est permise par un système de tige de poussée.

L'invention propose donc un procédé pour fabriquer un vitrage, en particulier un vitrage automobile, destiné à être collé dans la baie d'une carrosserie et comportant un cadre profilé avec une gorge dont la section est en U, la gorge comportant deux ailes équipées du côté intérieur de nervures servant à l'accrochage d'un cordon de colle de pose, procédé où l'on réalise le moulage du cadre profilé par injection sous pression dans un moule en plusieurs parties procédé dans lequel l'on utilise pour créer la gorge un noyau dont la forme est sensiblement complémentaire de celle de la gorge et qui coopère avec le moule de telle sorte que, lors du démoulage, ledit noyau ne soit extrait de la gorge qu'après que les parties du moule limitant les surfaces extérieures du cadre profilé l'aient déjà, au moins partiellement, libéré, caractérisé en ce que le noyau est lié mécaniquement à l'une des parties du moule et coulisse par rapport à elle de manière, au démoulage, à n'être entraîné par elle qu'après que ladite partie a libéré le cadre profilé.

L'invention a trait, également, à un dispositif tel que défini dans la revendication 3 pour mettre en oeuvre ce procédé.

Des vitrages prééquipés par les techniques de l'invention peuvent être montés sans aucune préparation supplémentaire grâce aux méthodes traditionnelles de collage. Il suffit qu'après avoir déposé un cordon de la colle de pose à l'intérieur du profilé en U, on pose l'ensemble dans la baie. Après durcissement de la colle, le vitrage peut être à tout moment extrait de sa feuillure grâce à une simple pression. Lors de cette opération, les côtés du profilé en U se déforment et s'écartent de la colle durcie.

Plus tard, le vitrage démonté peut être de nouveau utilisé et monté à nouveau. Pour réaliser cette opération, on commence par enlever la colle durcie qui adhère à la carrosserie puis l'on procède comme lors de la première monte.

Cette technique de pose de vitrage est particulièrement avantageuse dans le cas des vitrages automobiles car elle permet de démonter simplement un vitrage qui vient d'être posé tout en autorisant sa réutilisation ultérieure. Ainsi lorsqu'on doit faire un raccord de peinture sur une carrosserie, dans le voisinage d'un pare-brise par exemple, on peut effectuer toutes les opérations de retouche après avoir démonté le vitrage. Il suffit, à la fin de l'opération, de procéder à la pose comme la première fois. De même à la fin de la vie d'une automobile, il est très facile de séparer les vitrages de la tôle peinte de manière à procéder à leurs recyclages respectifs.

Dans ce qui suit, on présente des exemples de réalisation de l'invention illustrés par les dessins.

Parmi les figures :
- **la figure 1** montre un vitrage automobile prééquipé d'un profilé polymérisé collé sur le verre d'un seul côté,
- **la figure 2** montre un vitrage équipé d'un cadre profilé emprisonnant le chant du verre,
- **la figure 3** montre un moule d'encapsulation équipé d'un noyau mobile, pendant le procédé de moulage sous pression,
- **la figure 4,** le même outil pendant le démoulage.

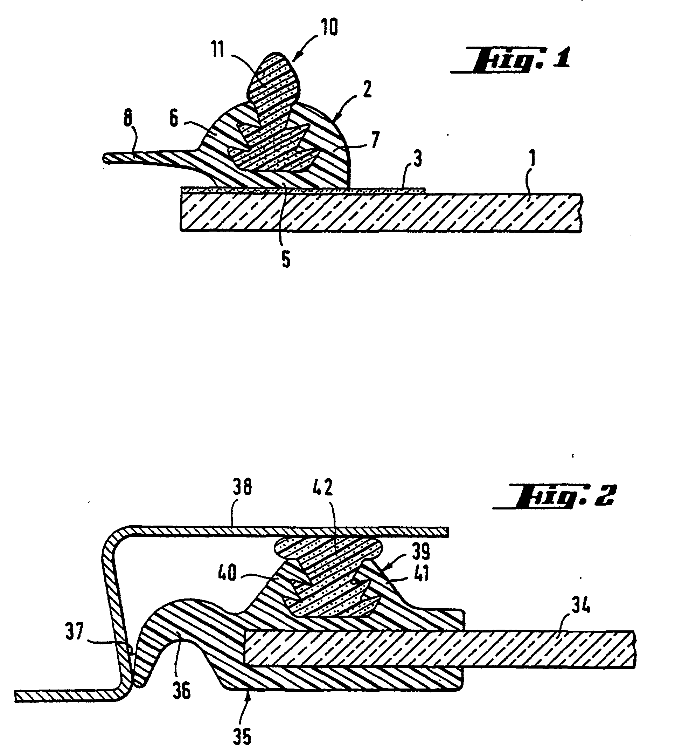

Sur la **figure 1** on voit un vitrage automobile prééquipé pour le montage direct par collage dans la baie d'une automobile. Le vitrage 1 est pourvu d'un cadre polymérisé 2 déposé d'un seul côté du verre par extrusion.

Le vitrage représenté figure 1 est équipé du côté destiné à être placé vis-à-vis de la tôle de la carrosserie d'un dépôt 3 en forme de cadre fait d'un émail cuit à chaud. Après dépôt sur le cadre 3 d'un primaire adapté, on dépose le profilé 2 sur l'émail 3. Le profil 2 a une section qui comporte essentiellement une forme de U avec un fond 5 et deux ailes 6 et 7. Le profilé 2 est équipé, par ailleurs, d'une lèvre 8 qui remplit des fonctions d'étanchéité et de centrage.

Le profil 2 est fait d'une matière thermoplastique constituée essentiellement d'un élastomère polyoléfine à base de polypropylène isotactique et de caoutchouc éthylène-propylène-diène (EPDM). Un produit qui convient parfaitement est le SANTOPRENE de la société Advanced-Elastomer-System. Le primaire déposé sur la couche d'émail 3 est avantageusement constitué d'un système polyuréthane à deux composants modifié dans un solvant. Celui-ci peut être un mélange de trichloréthylène et de 1,1,1-trichloréthane et de chlorure de méthylène. Ce sont, par exemple, les produits X-8310 de la société Henkel ou AK-920 de Koemmerling.

Les ailes latérales 6 et 7 du profilé possèdent des nervures longitudinales. L'espace interne du profilé limité par les ailes latérales s'élargit vers le bas, il prend ainsi la forme d'un sapin de Noël. Lors de la pose du vitrage, on remplit cet espace avec la colle de pose 10. Ce sera, par exemple, le produit Bétaseal de Gurit-Essex. Cette colle destinée à adhérer sur la tôle 38 qui limite la baie de la carrosserie a la caractéristique de n'établir aucun lien adhésif avec le profilé 2. La conséquence en est qu'il n'y a pas collage entre la colle et le profilé et que l'assemblage ne tiendra après durcissement de la colle que grâce à un accrochage mécanique entre la colle durcie 10 et le profilé 2. La colle 10 est déposée dans le creux du profilé 2 à l'aide d'une buse de telle manière qu'elle remplisse complètement le creux du profilé et que, par ailleurs, elle déborde sous la forme d'une excroissance 11. Celle-ci constitue la réserve de colle qui permettra la fixation par collage de l'ensemble du vitrage automobile dans la baie.

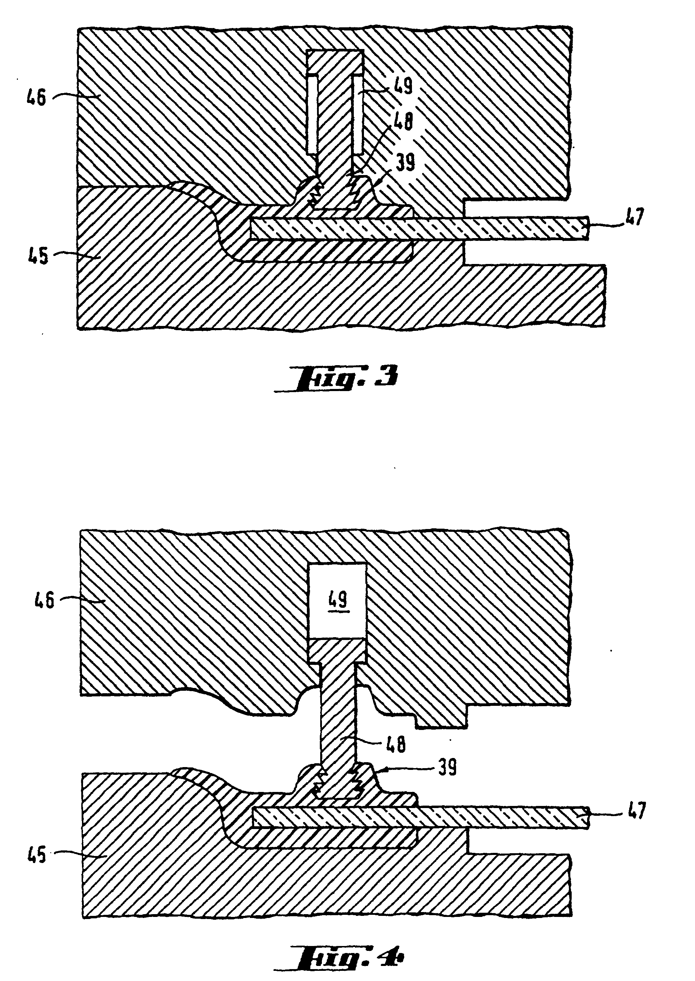

Sur la **figure 2**, le vitrage 34 prééquipé selon l'invention possède un cadre 35 en polymère obtenu par une technique d'encapsulation, c'est-à-dire par moulage haute pression. On voit que, dans ce cas, le vitrage 34 est enchâssé dans son cadre en élastomère 35. Ce cadre 35 est équipé d'une lèvre débordante 36. Lorsque le vitrage est posé, la lèvre 36 s'appuie sur la feuillure 37 du cadre de la fenêtre et obture ainsi l'espace laissé libre entre le vitrage et la carrosserie. Cette lèvre qui occupe généralement toute la périphérie du vitrage permet également à celui-ci de se centrer automatiquement dans la baie lors de la pose. La tôle 38 de la baie qui se trouve vis-à-vis du bord du vitrage et sensiblement parallèle à lui est utilisée pour le collage du vitrage prééquipé dans la baie. Le cadre profilé 35 possède en face de la tôle 38 une section en U 39 dont les ailes latérales 40, 41 sont équipées de nervures longitudinales sur leurs faces internes. La largeur du U décroît de sa base vers ses extrémités. Le creux est rempli de la colle de pose 42. Les matériaux utilisés respectivement pour constituer le cadre encapsulé 35 et la colle de pose 42 sont les mêmes que ceux qui ont été décrits lors de la description de la figure 1.

Sur la figure 2, on voit comment l'excroissance de la colle de pose qui a été déposée à l'intérieur du creux du profilé en U s'écrase pour venir adhérer à la tôle 38 de la baie. C'est sous cette forme qu'elle va durcir pour alors assurer un accrochage mécanique entre le cadre profilé 35 et la baie de la carrosserie sur laquelle elle adhère.

Dans les figures 3 à 6, sont représentés deux exemples de réalisation de profilés selon l'invention obtenus par encapsulation, c'est-à-dire par moulage haute pression.

Les **figures 3 et 4** représentent un moule d'encapsulation avec un demi-moule inférieur 45 et un demi-moule supérieur 46. A eux deux, ces demi-moules permettent d'obtenir le cadre 39 complet. Le vitrage 47 est posé sur le demi-moule inférieur 45 et, après positionnement du demi-moule supérieur 46, l'espace interne du moule est rempli sous pression par le polymère thermoplastique fondu. Pour créer la partie creuse du profilé en forme de U qui doit être équipée, on l'a vu, de nervures longitudinales, on a prévu d'équiper le demi-moule supérieur 46 d'un noyau mobile 48. Celui-ci peut être déplacé dans un logement 49 du demi-moule supérieur entre deux position extrêmes. Pendant l'injection, le noyau 48 occupe la position supérieure. En revanche, à la fin du formage du profilé, après que le polymère thermoplastique ait durci, l'extraction du noyau se fait en deux temps. Dans un premier temps, le demi-moule supérieur 46 est soulevé, ce qui libère la surface supérieure du profilé 39 (figure 5). Au cours de cette étape, le noyau 48 reste à sa place à l'intérieur du creux du U du profilé 39. Dans un deuxième temps, lorsqu'on continue à soulever le demi-moule supérieur, le noyau 48 arrive sur sa butée inférieure et est soulevé à son tour pour être enfin extrait de la partie creuse du cadre 39, en effet, à ce moment les ailes extérieures du U ont été libérées et peuvent se déformer pour livrer le passage au noyau 48.

Par comparaison avec les techniques d'extrusion, l'utilisation d'une méthode d'encapsulation par moulage haute pression pour déposer le profilé périphérique en élastomère thermofusible nécessite, on l'a vu, des moules spéciaux adaptés, ce qui complique l'opération d'encapsulation. En revanche. l'encapsulation comparée à l'extrusion permet de donner au profilé des formes plus variées, en particulier l'encapsulation permet la réalisation d'un joint périphérique qui entoure le chant du vitrage.

## Revendications

1. Procédé pour fabriquer un vitrage, en particulier un vitrage automobile, destiné à être collé dans la baie d'une carrosserie et comportant un cadre profilé avec une gorge dont la section est en U, la gorge comportant deux ailes équipées du côté intérieur de nervures servant à l'accrochage d'un cordon de colle de pose, procédé où l'on réalise le moulage du cadre profilé par injection sous pression dans un moule en plusieurs parties, procédé dans lequel on utilise pour créer la gorge un noyau dont la forme est sensiblement complémentaire de celle de la gorge, et qui coopère avec le moule de telle sorte que, lors du démoulage, ledit noyau ne soit extrait de la gorge qu'après que les parties du moule limitant les surfaces extérieures du cadre profilé l'aient déjà, au moins partiellement libéré, **caractérisé en outre en ce que** le noyau est lié mécaniquement à l'une des parties du moule et **en ce qu'**il coulisse par rapport à elle de manière, au démoulage, à n'être entraîné par elle qu'après que ladite partie ait libéré le cadre profilé.

2. Procédé selon la revendication 1, **caractérisé en ce que** le noyau peut coulisser par rapport à la partie du moule à laquelle il est lié entre deux positions extrêmes et **en ce que**, pendant l'injection, il occupe la position la plus proche et, après l'ouverture du moule, la position la plus éloignée de la partie du moule concernée.

3. Dispositif pour mettre en oeuvre le procédé selon l'une des revendications 1 ou 2, **caractérisé en ce qu'**il comporte un moule d'injection en plusieurs parties, l'une d'elles (46) possédant un logement (49) dans lequel peut se déplacer le noyau (48) entre deux positions extrêmes et **en ce que** le noyau est au fond du logement (49) pendant l'injection et à son autre extrémité au moment de son extraction.

## Patentansprüche

1. Verfahren zum Herstellen einer Glasscheibe, insbesondere einer Automobilglasscheibe, welche zum Einkleben in eine Fensteröffnung einer Karosserie vorgesehen ist und die einen Profilrahmen mit einem im Querschnitt u-förmigen Hohlraum umfasst, wobei der Hohlraum zwei an ihren Innenseiten mit Rillen versehene Schenkel umfasst, welche Rillen zum Eingreifen in einen Montagekleberstrang vorgesehen sind, bei welchem Verfahren man den Profilrahmen durch Spritzgießen in einer mehrteiligen Form herstellt und bei dem man zum Herstellen des Hohlraums einen Kem verwendet, dessen Form im wesentlichen komplementär zur Form des Hohlraums ist, und der mit der Form derart zusammenwirkt, dass beim Entformen dieser Kern erst dann aus dem Hohlraum heraus gezogen wird, wenn die die Außenflächen des Profilrahmens begrenzenden Teile der Form das Profil bereits wenigstens teilweise freigegeben haben, im übrigen **dadurch gekennzeichnet, dass** der Kern mechanisch mit einem der Teile der Form verbunden ist und derart gegenüber diesem Teil gleitet, dass er beim Entformen nicht mitgenommen wird, bevor dieser besagte Teil der Form den Profilrahmen freigegeben hat.

2. Verfahren nach Anspruch 1, **dadurch gekennzeichnet, dass** der Kern in Bezug auf den Teil der Form, mit dem er verbunden ist, zwischen zwei extremen Stellungen gleiten kann und dass er während des Einspritzens die dem Teil der Form nächste Stellung und nach dem Öffnen der Form die aus dem Teil der Form am weitesten herausgezogene Stellung einnimmt.

3. Vorrichtung zum Durchführen des Verfahrens nach einem der Ansprüche 1 oder 2, **dadurch gekennzeichnet, dass** sie eine Einspritzform aus mehreren Teilen umfasst, deren eines (46) eine Aufnahme (49) aufweist, in der ein Kern (48) sich zwischen zwei extremen Stellungen verschieben kann, und dass sich der Kern während des Einspritzens am Boden der Aufnahme (49) und im Moment des Herausziehens an dem anderen Ende der Aufnahme befindet.

## Claims

1. Process for the production of a glazing, particularly a car glazing, which is to be bonded in the opening of a body and which has a profiled frame with a groove having a U-shaped cross-section, the groove having two wings equipped on the inside with ribs used for the attachment of a fixing adhesive bead, whereby in said process the profiled frame is moulded by injection under pressure in a multipart mould, wherein for the creation of the groove use is made of a core, whose shape is substantially complimentary to that of the groove and which cooperates with the mould in such a way that during demoulding, said core is only extracted from the groove when the parts of the mould limiting the external surfaces of the profiled frame have at least partly been freed, **characterized in that** the core is mechanically connected to one of the parts of the mould and **in that** it slides with respect to the latter in such a way that on demoulding it is only moved by it after said part has freed the profiled frame.

2. Process according to claim 1, **characterized in that** the core can slide relative to the part of the mould to which it is connected between two extreme positions and that, during injection, it occupies the closest position and, after opening the mould, the furthest removed position from the mould part in question.

3. Apparatus for performing the process according to one of the claims 1 or 2, **characterized in that** it incorporates a multipart injection mould, one of them (46) having a recess (49) in which the core (48) can move between two extreme positions and **in that** the core is at the bottom of the recess (49) during injection and at its other end at the time of its extraction.
